# EUROPEAN PATENT APPLICATION

(11) **EP 4 296 531 A1**
(43) Date of publication of application: **27.12.2023**
(21) Application number: 22756318.6
(22) Date of filing: 21.02.2022
(51) Int. Cl.: F16D 1/06, F16D 1/08, F16F 15/126

(54) **FIXING STRUCTURE BETWEEN CRANKSHAFT AND TORSIONAL DAMPER**

(30) Priority: 22.02.2021 JP 2021026412
(71) Applicant: NOK Corporation, Minato-ku, Tokyo 105-8585 (JP)
(72) Inventor: UEKUSA, Hiroyuki, Saihaku-gun, Tottori 683-0362 (JP)
(74) Representative: TBK
(86) International application number: PCT/JP2022/006874
(87) International publication number: WO 2022/177001

(57) **Abstract**

There is provided a fixing structure between a crankshaft and a torsional damper capable of achieving reductions in the number of components and the number of work processes. In a fixing structure between a crankshaft 100 and a torsional damper 200 having an insertion hole into which a tip portion 120 of the crankshaft 100 is inserted, a fitting groove 121 extending in parallel to a rotation center axis of the crankshaft 100 is provided in an outer peripheral surface of the tip portion 120 of the crankshaft 100, and a fitting protrusion 211a to be fitted in the fitting groove 121 is provided on an inner peripheral surface of the insertion hole.

## Description

### [Technical Field]

The present disclosure relates to a fixing structure between a crankshaft and a torsional damper which are provided in an engine of an automobile.

### [Background Art]

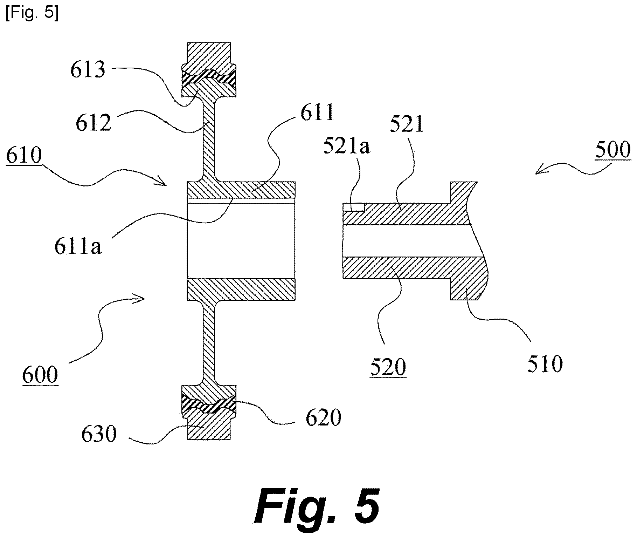

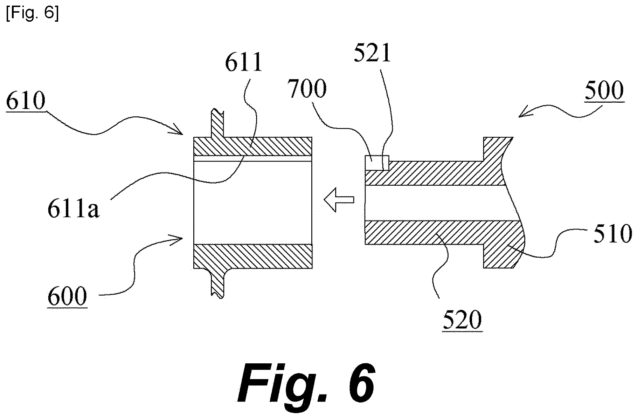

A torsional damper is fixed to a crankshaft provided in an engine of an automobile to suppress vibration. A description will be given of a fixing structure between a crankshaft and a torsional damper according to a conventional example with reference to Fig. 5 and Fig. 6. Fig. 5 is a cross-sectional view of the crankshaft and the torsional damper according to the conventional example. Fig. 6 is part of a cross-sectional view showing a state when the crankshaft and the torsional damper according to the conventional example are being fixed to each other.

In a crankshaft 500, a tip portion 520 having an outer diameter smaller than that of a crankshaft main body 510 is provided on a tip side of the crankshaft main body 510. In addition, a key groove 521, in which a key 700 is to be fitted by press-fitting, is provided in an outer peripheral surface of the tip portion 520.

A torsional damper 600 includes a hub 610 which is to be fixed to the crankshaft 500, a vibration ring 630, and a rubbery elastic body 620 which is provided between the hub 610 and the vibration ring 630. In addition, the hub 610 includes a first cylindrical portion 611, an outward flange portion 612, and a second cylindrical portion 613 which is provided concentrically with the first cylindrical portion 611 outside the outward flange portion 612 in a radial direction. The rubbery elastic body 620 is provided between an outer peripheral surface of the second cylindrical portion 613 and an inner peripheral surface of the vibration ring 630. An inner peripheral surface of the first cylindrical portion 611 in the hub 610 serves as an insertion hole into which the tip portion 520 of the crankshaft 500 is inserted. A key groove 611a, in which the key 700 is to be fitted by press-fitting, is provided also in an inner peripheral surface of the insertion hole.

With the configuration described above, in the process of fixing the crankshaft 500 and the torsional damper 600 each other, first, the key 700 is brought into a state in which the key 700 is mounted to the key groove 521 of the crankshaft 500 by press-fitting. Thereafter, by inserting the tip portion 520 of the crankshaft 500 into the inner peripheral surface (insertion hole) of the first cylindrical portion 611 while aligning the key 700 with the key groove 611a of the hub 610, it is possible to fix the crankshaft 500 and the torsional damper 600 to each other (see Fig. 6).

The fixing method described above uses not only the key but also an operation of press-fitting the key, and hence the number of work processes is increased.

### [Citation List]

### [Patent Literature]

[PTL 1]
Japanese Patent Application Publication No. H4-175536

### [Summary of Invention]

### [Technical Problem]

An object of the present disclosure is to provide a fixing structure between a crankshaft and a torsional damper capable of achieving reductions in the number of components and the number of work processes.

### [Solution to Problem]

The present disclosure has adopted the following means to achieve the above object.

That is, a fixing structure between a crankshaft and a torsional damper of the present disclosure is a fixing structure between a crankshaft and a torsional damper having an insertion hole into which a tip portion of the crankshaft is inserted, wherein a fitting groove extending in parallel to a rotation center axis of the crankshaft is provided in an outer peripheral surface of the tip portion of the crankshaft, and a fitting protrusion to be fitted in the fitting groove is provided on an inner peripheral surface of the insertion hole.

According to the present disclosure, by inserting the tip portion into the insertion hole such that the fitting protrusion provided on the inner peripheral surface of the insertion hole in the torsional damper is fitted in the fitting groove provided in the tip portion of the crankshaft, it is possible to fix the torsional damper and the crankshaft to each other.

The fitting protrusion may be provided in parallel to the rotation center axis over an entire area of the insertion hole in a direction of the rotation center axis.

The fitting protrusion may be provided in parallel to the rotation center axis in a partial area of the insertion hole in a direction of the rotation center axis.

### [Advantageous Effects of Invention]

As described above, according to the present disclosure, it is possible to achieve reductions in the number of components and the number of work processes.

### [Brief Description of Drawings]

[Fig. 1]

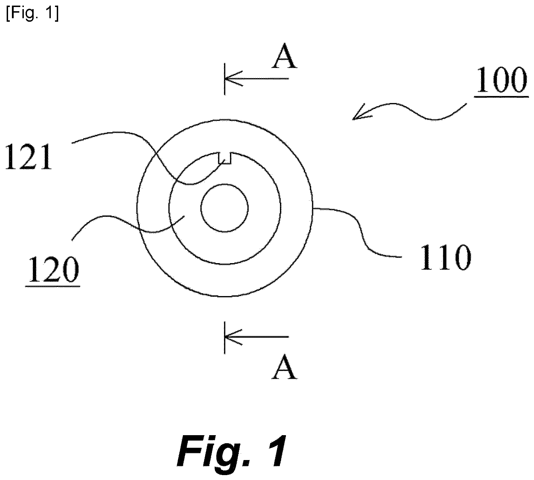

   Fig. 1 is a front view showing a vicinity of a tip of a crankshaft according to Embodiment 1 of the present disclosure.
[Fig. 2]

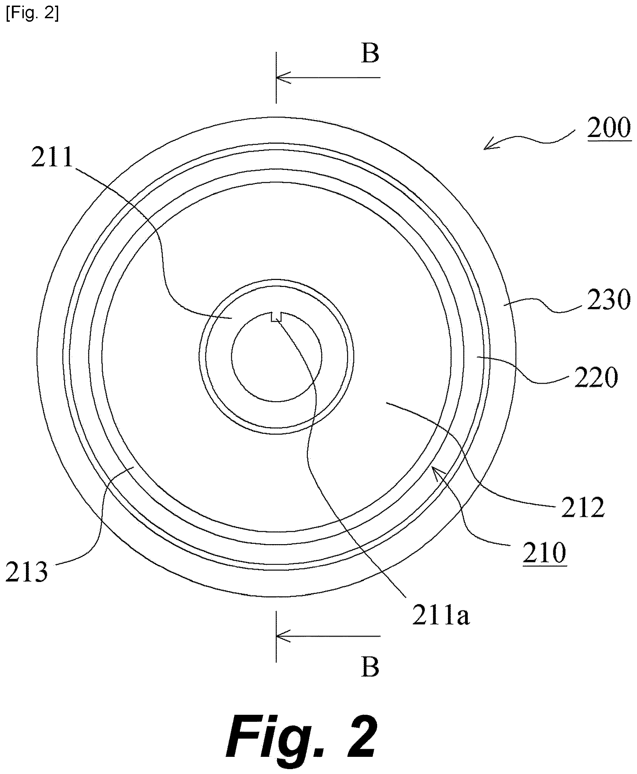

   Fig. 2 is a front view of a torsional damper according to Embodiment 1 of the present disclosure.
[Fig. 3]

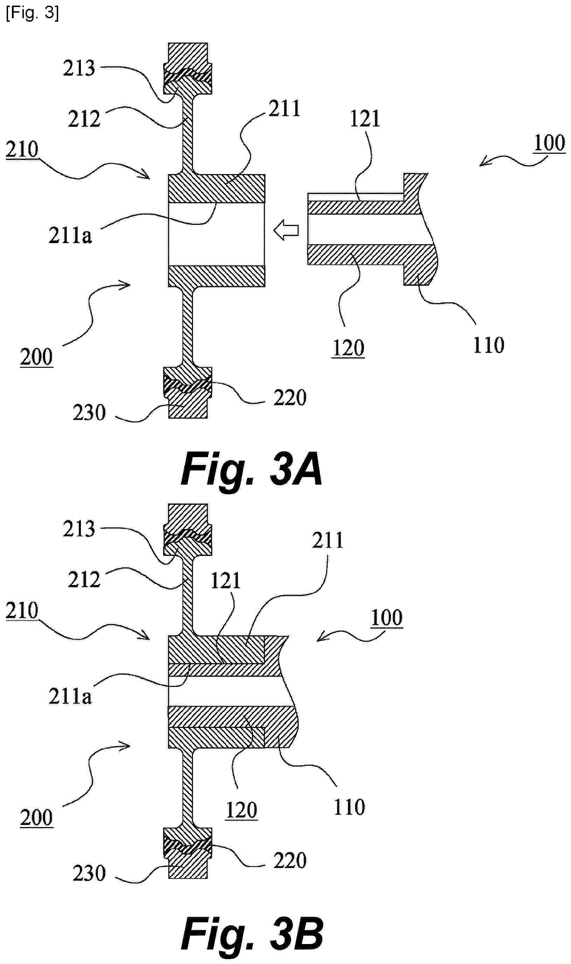

   Figs. 3A and 3B are cross-sectional views showing a state when the crankshaft and the torsional damper according to Embodiment 1 of the present disclosure are in the process of being fixed to each other.
[Fig. 4]

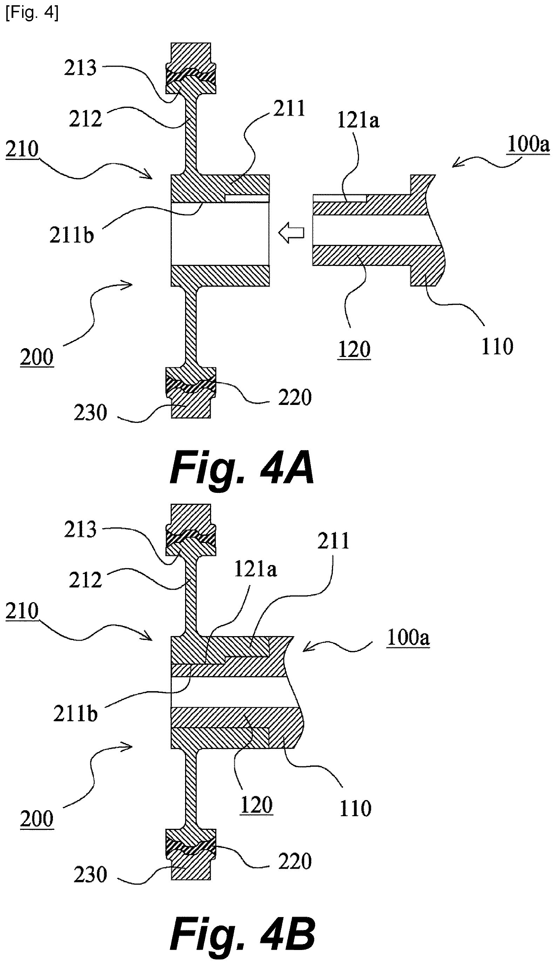

   Figs. 4A and 4B are cross-sectional views showing a state when a crankshaft and a torsional damper according to Embodiment 2 of the present disclosure are fixed to each other.
[Fig. 5]
   Fig. 5 is a cross-sectional view of a crankshaft and a torsional damper according to a conventional example.
[Fig. 6]
   Fig. 6 is part of a cross-sectional view showing a state when the crankshaft and the torsional damper according to the conventional example are in the process of being fixed to each other.

### [Description of Embodiments]

Hereinbelow, with reference to the drawings, modes for carrying out the disclosure will be illustratively described in detail on the basis of embodiments. It should be noted that, however, unless otherwise specified expressly, the dimensions, materials, shapes, and relative arrangements of components described in these embodiments are not intended to limit the scope of the disclosure only to the dimensions, materials, shapes, and relative arrangements thereof.

### (Embodiment 1)

With reference to Figs. 1 to 3, a description will be given of a fixing structure between a crankshaft and a torsional damper according to Embodiment 1 of the present disclosure. Fig. 1 is a front view showing a vicinity of a tip of the crankshaft according to Embodiment 1 of the present disclosure. Fig. 2 is a front view of the torsional damper according to Embodiment 1 of the present disclosure. Figs. 3A and 3B are cross-sectional views each showing a state when the crankshaft and the torsional damper according to Embodiment 1 of the present disclosure are in the process of being fixed to each other. Note that Figs. 3A and 3B show the crankshaft in cross-sectional views taken along the AA line shown in Fig. 1 and the torsional damper in cross-sectional views taken along the BB line shown in Fig. 2.

### <Fixing Structure Between Crankshaft and Torsional Damper>

In a crankshaft 100, a tip portion 120 which is smaller in outer diameter than a crankshaft main body 110 is provided on a tip side of the crankshaft main body 110. In addition, a fitting groove 121 which extends in parallel to a rotation center axis of the crankshaft 100 is provided in an outer peripheral surface of the tip portion 120.

A torsional damper 200 includes a hub 210 which is to be fixed to the crankshaft 100, a vibration ring 230, and a rubbery elastic body 220 which is provided between the hub 210 and the vibration ring 230. In addition, the hub 210 includes a first cylindrical portion 211, an outward flange portion 212, and a second cylindrical portion 213 which is provided concentrically with the first cylindrical portion 211 outside the outward flange portion 212 in a radial direction. The rubbery elastic body 220 is provided in a state in which the rubbery elastic body 220 is press-fitted between an outer peripheral surface of the second cylindrical portion 213 and an inner peripheral surface of the vibration ring 230. Further, an inner peripheral surface of the first cylindrical portion 211 in the hub 210 serves as an insertion hole into which the tip portion 120 of the crankshaft 100 is inserted. A fitting protrusion 211a which is to be fitted in the fitting groove 121 is provided on an inner peripheral surface of the insertion hole.

The fitting protrusion 211a according to the present embodiment is provided in parallel to the rotation center axis (the rotation center axis of each of the crankshaft 100 and the torsional damper 200) over an entire area of the insertion hole in a direction of the rotation center axis.

### <Advantage of Fixing Structure Between Crankshaft and Torsional Damper According to Present Embodiment>

According to the crankshaft 100 and the torsional damper 200 which are configured as described above, they can be fixed to each other in the following manner. That is, the tip portion 120 is inserted (press-fitted) into the inner peripheral surface (insertion hole) of the first cylindrical portion 211 while the tip portion 120 of the crankshaft 100 and the torsional damper 200 are kept in a state in which the rotation center axes of the tip portion 120 of the crankshaft 100 and the torsional damper 200 are aligned with each other and the fitting groove 121 is aligned with the fitting protrusion 211a in a circumferential direction (rotation direction) (see Fig. 3A). With this, the fitting groove 121 and the fitting protrusion 211a are fitted together, and the crankshaft 100 and the torsional damper 200 are fixed to each other (see Fig. 3B). Note that the crankshaft 100 and the torsional damper 200 are positioned in a radial direction by the outer peripheral surface of the tip portion 120 and the inner peripheral surface of the first cylindrical portion 211, and the crankshaft 100 and the torsional damper 200 are positioned in the circumferential direction (rotation direction) by a fitting portion between the fitting groove 121 and the fitting protrusion 211a.

Thus, according to the fixing structure according to the present embodiment, unlike the conventional art, a key is not required and a work process of press-fitting the key is not used. Consequently, it is possible to achieve reductions in the number of components and the number of work processes.

### (Embodiment 2)

Fig. 4 shows Embodiment 2 of the present disclosure. Embodiment 1 described above has shown a configuration where the fitting protrusion is provided over the entire area of the insertion hole in the torsional damper in the direction of the rotation center axis. In contrast to this, the present embodiment shows a configuration where the fitting protrusion is provided in a partial area of the insertion hole in the torsional damper in the direction of the rotation center axis. Other configurations and operations are the same as those of Embodiment 1, and hence the same components are designated by the same reference numerals, and the description thereof will be appropriately omitted.

Figs. 4A and 4B are cross-sectional views showing a state when a crankshaft and a torsional damper according to Embodiment 2 of the present disclosure are in the process of being fixed to each other. Note that Figs. 4A and 4B correspond to the cross-sectional views of the crankshaft taken along the AA shown in Fig. 1 and the cross-sectional views of the torsional damper taken along the BB shown in Fig. 2.

In a crankshaft 100a according to the present embodiment, similarly to Embodiment 1, the tip portion 120 which is smaller in outer diameter than the crankshaft main body 110 is provided on the tip side of the crankshaft main body 110. In addition, a fitting groove 121a which extends in parallel to the rotation center axis of the crankshaft 100 is provided in the outer peripheral surface of the tip portion 120.

Further, similarly to Embodiment 1, the torsional damper 200 according to the present embodiment also includes the hub 210, the vibration ring 230, and the rubbery elastic body 220. In addition, similarly to Embodiment 1, the hub 210 includes the first cylindrical portion 211, the outward flange portion 212, and the second cylindrical portion 213. Further, in the present embodiment, similarly to Embodiment 1, the inner peripheral surface of the first cylindrical portion 211 in the hub 210 serves as the insertion hole into which the tip portion 120 of the crankshaft 100 is inserted. In addition, a fitting protrusion 211b which is to be fitted in the fitting groove 121a by press-fitting is provided on the inner peripheral surface of the insertion hole.

The fitting protrusion 211b according to the present embodiment is provided in parallel to the rotation center axis (the rotation center axis of each of the crankshaft 100 and the torsional damper 200) in a partial area of the insertion hole in the direction of the rotation center axis. Specifically, the fitting protrusion 211b is provided in the insertion hole so as to extend from an end surface on a side opposite to a side on which the crankshaft 100 is inserted to a position between the end surface on the side on which the crankshaft 100 is inserted and the end surface on the side opposite to the side on which the crankshaft 100 is inserted.

A procedure for fixing the crankshaft and the torsional damper to each other is the same as that in the case of Embodiment 1 described above. Note that Fig. 4A shows a state during a fixing operation, and Fig. 4B shows a state after fixing. Thus, in the present embodiment, similarly to Embodiment 1, it is possible to obtain the same effects as those of Embodiment 1 described above. Note that, in the case where the dimensional tolerance of the inner diameter of the insertion hole in the hub 210 (the inner peripheral surface of the first cylindrical portion) can be set to be less than 0.03 mm, the configuration of the present embodiment may be adopted. On the other hand, in the case where the above dimensional tolerance is not less than 0.03 mm, the configuration of Embodiment 1 described above may be adopted.

### (Others)

The individual embodiments described above have shown the case where the fitting grooves 121 and 121a are provided at one position in the circumferential direction in the outer peripheral surface of the tip portion 120 of the crankshaft 100, and the fitting protrusions 211a and 211b are provided at one position in the circumferential direction in the insertion hole of the torsional damper 200. However, the number of these fitting grooves and the number of these fitting protrusions are not particularly limited, and the fitting grooves and the fitting protrusions can be provided at two or more positions.

### [Reference Signs List]

- 100, 100a: Crankshaft
- 110: Crankshaft main body
- 120: Tip portion
- 121, 121a: Fitting groove
- 200: Torsional damper
- 210: Hub
- 211: First cylindrical portion
- 211a, 211b: Fitting protrusion
- 212: Outward flange portion
- 213: Second cylindrical portion
- 220: Rubbery elastic body
- 230: Vibration ring

## Claims

1. A fixing structure between a crankshaft and a torsional damper having an insertion hole into which a tip portion of the crankshaft is inserted, wherein
a fitting groove extending in parallel to a rotation center axis of the crankshaft is provided in an outer peripheral surface of the tip portion of the crankshaft, and
a fitting protrusion to be fitted in the fitting groove is provided on an inner peripheral surface of the insertion hole.

2. The fixing structure between the crankshaft and the torsional damper according to claim 1, wherein the fitting protrusion is provided in parallel to the rotation center axis over an entire area of the insertion hole in a direction of the rotation center axis.

3. The fixing structure between the crankshaft and the torsional damper according to claim 1, wherein the fitting protrusion is provided in parallel to the rotation center axis in a partial area of the insertion hole in a direction of the rotation center axis.
